# EUROPEAN PATENT SPECIFICATION

(11) **EP 3 296 585 B1**
(45) Date of publication and mention of the grant of the patent: **27.11.2019**
(21) Application number: 16189700.4
(22) Date of filing: 20.09.2016
(51) Int. Cl.: F16D 55/2265, F16D 65/18

(54) **DISC BRAKE AND METHOD FOR OPERATING A DISC BRAKE**
SCHEIBENBREMSE UND VERFAHREN ZUM BETRIEB DER SCHEIBENBREMSE
FREIN À DISQUE ET PROCÉDÉ D'UTILISATION D'UN FREIN À DISQUE

(43) Date of publication of application: 21.03.2018
(73) Proprietor: KNORR-BREMSE Systeme für Nutzfahrzeuge GmbH, 80809 München (DE)
(72) Inventor: TOTH, Janos, 6000 Kecskemét (HU); THEIL, Robert, 82299 Türkenfeld (DE); MLINÁRCSEK, Csaba, 1165 Budapest (HU); KOVACSIK, Peter, HU-1119 Budapest (HU); FUCHS, Alexander, 81677 München (DE)

(56) References cited:
- DE-A1- 4 119 928
- GB-A- 2 128 277
- US-A- 4 865 161
- US-A1- 2011 278 104

## Description

The invention relates to a disc brake, in particular pneumatically actuated, for a vehicle, in particular for a commercial vehicle. The invention further relates to a method for operating a disc brake.

A generic disc brake has a floating caliper and a brake disc with a brake application device arranged on one side, wherein the application device has a brake lever swivelable by a brake actuator, e.g. an operating cylinder. In a braking situation, the brake actuator presses an inner side brake pad to the brake disc. Due to the resulting reaction force, the floating caliper moves in the opposite direction and presses the outer brake pad to the brake disc as well. The brake caliper is float-mounted on the brake carrier and can slide axially due to very limited friction force.

The friction force between the brake pads and the brake disc decelerates the vehicle. After releasing the brake, the clamping force of the brake pads is decreasing and the rotation of the brake disc or other dynamic effects move the caliper back to its initial position, when the disc brake is in a release position of the disc brake. The position of the caliper on the brake carrier is not fixed in the initial position, i.e. in the release position of the disc brake.

Dynamic effects due to road surface or turning maneuvers of the vehicle can result in lateral accelerations on the floating caliper, which are able to move the caliper on its guide bearings. These movements of the floating caliper could lead to an unwanted contact of the brake pad(s) and the brake disc. This can result in momentary power dissipation due to dragging of the brake. Such a residual drag torque can cause unwanted additional fuel consumption, power loss and pad/disc wear.

Document DE 4301621 A1 describes a disc brake having a floating caliper and expansion springs for the brake pads. The expansion spring is fixed to the brake carrier and pushes the brake pads from the brake disc when the brake is released. Thus the caliper is moved to its centralized or initial position. The geometry and the force of the spring are calculated for accurate operation independent on the wear status of the brake pads. Due to the complicated design of the spring, the spring is sensitive to manufacturing tolerances and deformation deriving from its handling till the installation, from assembly and from usage. During operation of the, other environmental effects, e.g. heat radiation of the brake parts, corrosion or other mechanical impacts are stressing the component. The durability of the spring is lower than the durability of the disc brake. This can require a change of the spring together with a change of the brake pads. According to testing results the efficiency of eliminating the drag torque is less than 100%.

Documents DE 41 19 928 C2, GB 2 128 277 A and US 4,865,161 A all describe similar setups of a disc brake having a floating caliper and expansion springs. The caliper floats on sliding pins mounted to a brake carrier. Instead of an external spring according to document DE 4301621 A1, in these cases the springs are arranged on the sliding pins together with a friction element. Interplay of the spring and the friction element provides an adjustment of the position of the caliper to compensate for the wear of the brake pads and to keep an appropriate clearance between the brake pads and the brake disc.

Document US 2011/0278104 A1 also describes a disc brake having a floating caliper. According to this document, the position of the caliper is adjusted by an hydraulically moved element in connection with a friction element.

In all described cases, dynamic effects due to road surface or turning maneuvers of the vehicle can still lead to an unwanted contact of the brake pad(s) and the brake disc.

Document DE 19903620 C1 describes a pneumatically actuated disc brake for road vehicles. A synchronization chain drives a passive caliper position control. A caliper position adjuster is assembled into the sliding bearing unit of the caliper, its driver gear is connected by the synchronization chain with the wear adjuster drive. The correct synchronization of the caliper movement with moving other brake components depending on their wear status is important for avoiding straining and damaging of the parts. The position adjuster is designed for setting the caliper position according to the half of the clearance of the pads and the brake disc. It is assumed that the wear of the pads is equal on both sides. In case of the different wearing of the pads, it can be possible that the adjusted caliper position is not centered. This can result in unwanted drag torque. Another problem can be the limited place in the sliding bearing unit for placing a spring, which is suitable for centering the caliper in every wear case. The object of the invention is to develop the generic disc brake and a method for operating a disc brake to reduce wear and costs.

The object is solved by a disc brake and a method according to the independent claims. Advantageous embodiments are subject of the dependent claims.

A disc brake according to the invention, in particular a pneumatically actuated disc brake, for a vehicle, in particular for a commercial vehicle, comprises a floating caliper straddling a brake disc and shiftably mounted on at least one guide bearing of a stationary brake carrier, and two brake pads displaceable arranged in opposite direction in the caliper, wherein an inner brake pad of the two brake pads can be pressed against the brake disc by a brake actuator. The disc brake is characterized in that it comprises a caliper position control unit with an actuator for moving the caliper relative to the brake carrier and a friction clutch for coupling the actuator to the caliper and/or the brake carrier, wherein the friction clutch is operated by the actuator.

The caliper position control unit is able to eliminate or at least reduce significantly the drag and reduce wear and costs by adjusting a clearance between the brake disc and the brake pad(s). To control the clearance, the caliper can be moved relative to the fixed brake carrier using the actuator. The friction clutch allows to engage the actuator with the caliper and/or the brake carrier to perform the clearance adjustment or to keep the adjusted clearance. During braking, i.e. if the disc brake is operated, the friction clutch can be disengaged. The caliper is then able to move freely along the guide axis thereby guaranteeing equal contact pressures of both brake pads. Using one and the same actuator for operating the friction clutch and for moving the caliper simplifies the mechanical setup and the amount of control installation, e.g. control means for the actuator(s).

In an advantageous embodiment of the disc brake, the caliper position control unit is arranged at an outer end of a guide section of a caliper head, the guide section being coupled to a guide section of the brake carrier via the guide bearing. This allows for a compact integration of the caliper position control unit into a known and conventional disc brake design.

In a further advantageous embodiment of the disc brake, the actuator is pneumatically operated and comprises a cylinder and at least one piston. Preferably, the cylinder is advantageously fixed to the caliper and the piston is coupled to a piston rod that extends into a bore of the guide section of the brake carrier. Further preferred, the friction clutch is mounted on the piston rod within the bore. The friction clutch is for example a radially acting clutch which comprises a cone arranged on the piston rod and a radially expandable split ring that interacts with the guide section of the brake carrier in a force-fitting manner. This way the friction clutch integrates into the guide section in a space saving manner. When activated, it couples the piston rod to the brake carrier. With the cylinder being coupled to the caliper, an actuation movement of the piston within the cylinder translates into a movement of the caliper relative to the brake carrier. The split ring can consist of a single segment, i.e. be a ring with one radial cut. In order to lower the force required to activate the clutch, the split ring can comprise two or more segments, e.g. four segments. A radial spring can be provided to hold the segments in place.

In a further advantageous embodiment of the disc brake, a support ring is arranged adjacent to the split ring to hold the split ring in position while being radially expanded during interaction with the cone. Preferably a spring is arranged between the support ring and a fixed component of the caliper position control unit, wherein the fixed component is e.g. a sleeve attached to a mounting flange of the caliper position control unit. Further preferred, the spring is arranged axially around the piston rod. The spring can be a spiral spring or at least one disc spring. The support ring prevents the split ring to slide in the bore before it engages with the guide section. The spring provides the required holding force for the support ring. After the split ring has coupled to the guide section, a further movement of the piston rod to move the caliper relative to the brake carrier is possible by compressing the spring.

It is further advantageous to delimit the movement of the support ring to the width of a gap, which is formed between the support ring and a fixed part of the caliper position control unit. The width of the gap preferably equals a desired clearance between the brake disc and one of the brake pads. The movement of the caliper to achieve the clearance between the outer brake pad and the disc is thus mechanically defined. No expensive sensors are needed to measure and control the clearance.

A method according to the invention for operating a disc brake is suitable for a disc brake that comprises a floating caliper straddling a brake disc and shiftably mounted on at least one guide bearing of a stationary brake carrier, an inner brake pad and an outer brake pad displaceable arranged in opposite direction in the caliper, wherein the inner brake pad can be pressed against the brake disc by a brake actuator and wherein the outer brake pad is fixed to the caliper, and a caliper position control unit. The method has the following steps: After a release of the disc brake, a friction clutch of the caliper position control unit is activated to couple an actuator to the caliper and/or the brake carrier. The actuator is operated to move the caliper relative to the brake carrier until a defined clearance between the brake disc and the outer brake pad is reached, wherein the friction clutch is operated by the actuator. Then, the friction clutch is deactivated when the disc brake is operated again. Advantages of the method are as described above in connection with the disc brake.

The invention will be better understood by means of the following description, given with reference to the drawings, which illustrate the embodiments of the invention, and in which:
- Figure 1: illustrates a schematic cross-sectional view of a first embodiment of a disc brake with a caliper position control unit;
- Figure 2: shows a cross-sectional view of a section of a second embodiment of a disc brake with a caliper position control unit;
- Figure 3: is a flow-chart of a method for operating a disc brake with a caliper position control unit;
- Figures 4, 5: each show a cross-sectional view of a section of a further embodiment of a disc brake with a caliper position control unit; and
- Figure 6: shows a functional block diagram of a disc brake according to the invention.

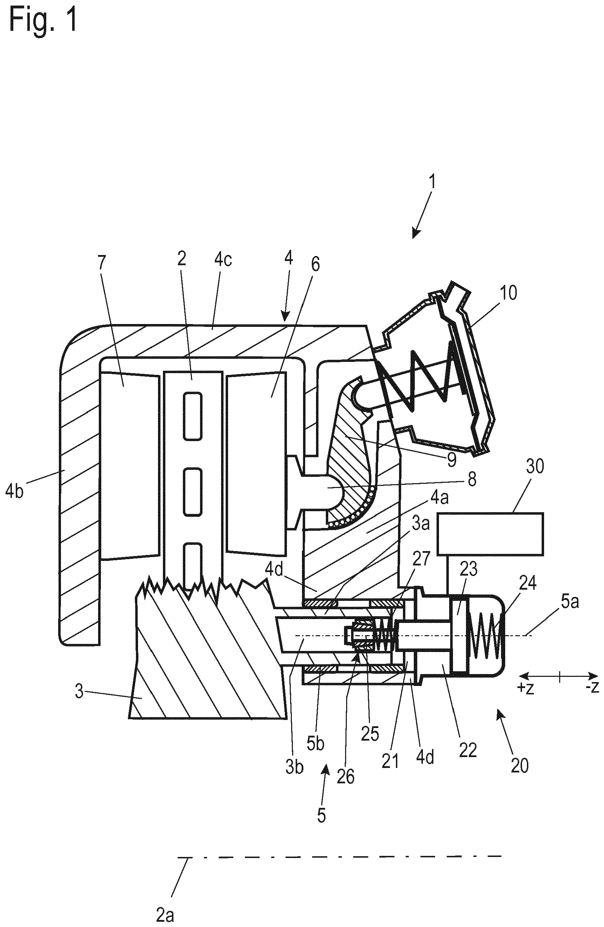

Figure 1 shows a schematic cross-sectional view of a disc brake 1 of the invention. The disc brake 1 is a part of a not shown e.g. commercial vehicle and has a brake disc 2 with a disc axis 2a (schematically shown as a dashed-dotted line), a brake carrier 3, a floating caliper 4, a guide bearing 5, brake pads 6, 7, a brake plunger 8, and a brake actuator 10, which acts on the brake plunger 8 via a brake lever 9. The brake carrier 3 has been partially removed in this drawing to give insight on the inner parts of the disc brake 1.

The floating caliper 4 is mounted on the guide bearing 5 of the brake carrier 3. It is noted that usually more than the one guide bearing 5 shown are used, e.g. two guide bearings. Each guide bearing 5 comprises a guide axis 5a and a sliding bearing 5b. The floating caliper can slide on the sliding bearing 5b of the guide bearing 5 axially in a direction of the guide axis 5a in parallel with the disc axis 2a. The direction of the guide axis 5a and the disc axis 2a is also called z-direction in the following. The outwards direction towards the outer brake pad 7 is regarded as the positive z-direction, while the inwards direction is regarded as the negative z-direction.

The floating caliper straddles the brake disc 2, and comprises a caliper head 4a and a caliper back 4b, which are connected by at least one tension strut 4c. There is a brake pad 6, 7 on each side of the brake disc 2. The brake pads 6, 7 are arranged in and supported by the caliper 4. Each brake pad 6, 7 comprises a backplate, on which a brake lining is fixed. The brake pad 6 arranged between the brake disc 2 and the caliper head 4a is called the inner brake pad, and the other brake pad 7 between the brake disc 2 and the caliper back 4b is called the outer brake pad 7.

Furthermore, the brake carrier 3 is provided with a guide section 3a and the caliper head 4a is provided with a guide section 4d. The guide section 4d of the caliper head 4a surrounds the respective associated sliding bearing 5b, which in turn is arranged around the guide section 3a of the brake carrier 3.

In the example shown the brake actuator 10 is a pneumatic actuator, as usual for heavier commercial vehicles. Pressurizing an inner volume of the brake actuator 10 applies force on the lever 9 and the brake plunger 8. As a result, the inner brake pad 6 is pressed against the brake disc 2. Due to the resulting reaction force, the floating caliper 4 moves in the opposite direction and presses the outer brake pad 7 to the brake disc 2 as well with equal force.

In an advantageous implementation of the brake disc 1 at least two brake plungers 8 are used and are commonly connected to the lever 9 via a crosshead. Each plunger is then provided with an external thread and screwed into bores with internal thread of the crosshead. The crosshead can move in a direction parallel to the disc axis. Often a return spring is arranged between the crosshead and the caliper head. The return spring exerts its force on the crosshead in order to push it away from the brake disc when the disk brake is released.

In a further advantageous implementation the brake plunger 8 is equipped with a wear adjuster unit, which compensates the wear of the brake lining of the brake pads 6, 7 and also the brake disc 2. Document EP 0 566 008 A1 illustrates an example of the structure and functional principle of a disc brake with a suitable wear adjuster unit. If more than one brake plungers are provided, they are usually coupled by means of a synchronization unit, e.g. having a synchronization chain. The wear adjuster unit then operates on all brake plungers.

Furthermore, the disc brake 1 comprises a readjusting device for moving the caliper 4 to an initial position when the disc brake 1 is in its release position, e.g. as shown in Figure 1. The readjusting device is designed as a caliper position control unit 20. As the caliper 4 can slide on the guide bearing 5 of the brake carrier 3 and changes its position in relation to the stationary brake carrier 3 not only at brake actuation and releasing of the brake, but also e.g. in case of unintended traffic situations, it can cause the so called drag torque which creates unwanted additional fuel consumption as well as unwanted additional wear of the brake parts. The caliper position control unit 20 can eliminate or at least reduce these unwanted effects. The caliper position control unit 20 will be described in detail below.

As mentioned above, the disc brake 1 is activated by the brake actuator 10, which applies force on the lever 9 and the brake plunger 8. The inner brake pad 6 is pressed against the brake disc 2 directly, and the outer brake pad 7 is pressed against the brake disc 2 via the floating caliper 4.

The friction force between the brake pads 6, 7 and the brake disc 2 decelerates the vehicle. During releasing of the disc brake 1 the clamping force of the brake pads 6, 7 is decreasing and the inner brake pad 6 is finally retracted due to a retraction spring, which is not shown in figure 1. Rotation of the brake disc 2 or outer dynamic effects move the caliper 4 towards its initial position.

It is desired that the caliper 4 moves into a centered position on the brake carrier 3 such that the brake pads 6, 7 do not contact the brake disc 2. The term "centered position" means that there is a clearance between the brake disc 2 and the inner brake pad 6 as well as between the brake disc 2 and the outer brake pad 7, wherein the values of these both clearances are ideally equal. In other words, the clearances are symmetrical.

Without any additional means, it is unlikely that the mentioned rotation effects bring the caliper 4 in the advanced centered position. Additionally, dynamic effects due to road surface or turning maneuvers of the vehicle could result in lateral accelerations on the floating caliper 4, whereby the caliper 4 can be displaced on the guide bearings 5 (even further) out of its centered position. These effects could lead to an unwanted contact of the brake pads 6, 7 and the brake disc 2, which could result in momentary power dissipation due to dragging of the disc brake 1. If the caliper 4 has not been moved into its centered position in the release position of the disc brake 1 after brake application, this can cause a negative effect on the residual drag torque which in turn causes unwanted additional fuel consumption, power loss and brake pad/disc wear.

For this reason, the disc brake 1 is provided with the caliper position control unit 20.

The caliper position control unit 20 is arranged at an outer end of the guide section 4d of the caliper head 4a with a flange 21 and cooperates with the stationary brake carrier 3, which will be described in detail below.

The caliper position control unit 20 of this first embodiment is pneumatically driven and comprises a cylinder 22 with a piston 23. Pressurized air from a pressure unit 30 applies a force in the negative z-direction against a retraction spring 24. The piston 23 is coupled with a piston rod 25, which extends into a bore 3b in the guide section 3a. The bore 3b is aligned with the guide axis 5a of the guide bearing 5, i.e. along the direction of the floating movement of the caliper 4.

A friction clutch 26 is mounted at an end of the piston rod 25 opposite the piston 23. The friction clutch 26 is accordingly positioned in the bore 3b. It cooperates with a spring 27.

On activation of the friction clutch 26, an outer circumference of the friction clutch 26 couples with an inner surface of the bore 3b by friction, i.e. in a force-fit manner. Accordingly, the piston rod 25 is coupled to the brake carrier 3 on activation of the friction clutch 26, while the cylinder 22 is mounted to the caliper 4. After engagement of the friction clutch 26, a movement of the piston rod 25 relative to the cylinder 22 thus moves the caliper 4 with respect to the brake carrier 3 along the guide axis 5a of the guide bearing 5.

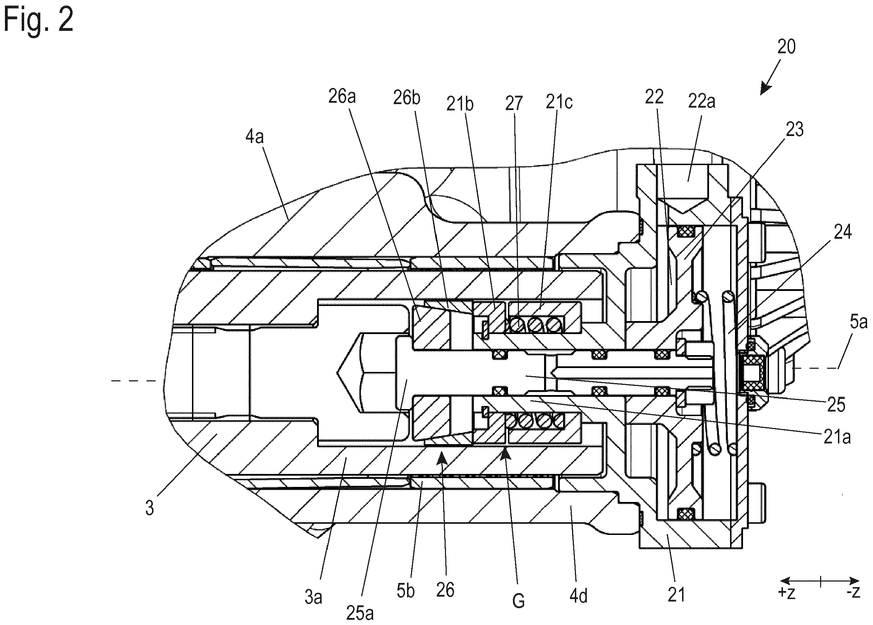

The caliper position control unit 20 with its parts will be now described in detail with reference to a second embodiment in figure 2, which is an enlarged sectional view of a real implementation of the caliper position control unit 20 according to figure 1. Same reference signs denote the same or equivalent components in this and all further figures as in figure 1.

In this second embodiment of a caliper position control unit 20 the basic setup, e.g. the design of the guide section 4d of the caliper 4, as well as the associated guide bearing 5 are similar or equal to the first embodiment shown in figure 1.

Again, a cylinder 22 is mounted at the caliper 4 with a flange 21. Pressurizing the cylinder 22 via a pressure inlet 22a moves a piston 23 in positive z-direction along the guide axis 5a against a retraction spring 24. The piston 23 is coupled with the piston rod 25, which extends into the bore 3b in the guide section 3a. A radially acting friction clutch 26 is positioned at the end of the piston rod 25. The piston rod 25 is terminated by a head 25a, which acts on the friction clutch 26.

The friction clutch 26 comprises a cone 26a concentrically arranged around the piston rod 25 and in contact with the head 25a. An outer conical surface of the cone 26a engages with a split ring 26b that has a conical inner and a cylindrical outer surface. A movement of the cone 26a further into the split ring 26b widens the split ring 26b, which then interacts with the inner surface of the bore 3b in a force-fitting manner.

To ensure that the split ring 26b does not evade the cone 26a, it is supported by a support ring 21b, which is positioned on a sleeve 21a that extends from the flange 21 concentrically around the piston rod 25 along the guide axis 5a.

On one side (the side facing the friction clutch 26), the support ring 21b is secured e.g. by a snap ring, while it can slide on the sleeve 21a towards the other side. On the other side of the support ring 21b a further ring 21c is attached to the sleeve 21a. A spring 27 is arranged between the support ring 21b and the further ring 21c. The spring 27 pushes the rings 21b, c apart from each other, and thus presses the support ring 21b against the snap ring. The spring 27 is partly countersunk into the further ring 21c. The further ring 21c acts as a stop for the support ring 21b, wherein a gap G is formed due to the spring force of the spring 27 if the cylinder 22 is not pressurized.

During operation of the disc brake 1 the cylinder 22 is not pressurized and the piston rod 25 is shifted in the positive z-direction due to the spring force of the retraction spring 24. The friction clutch 26 is not activated and the caliper 4 is free to move along the guide axis 5a.

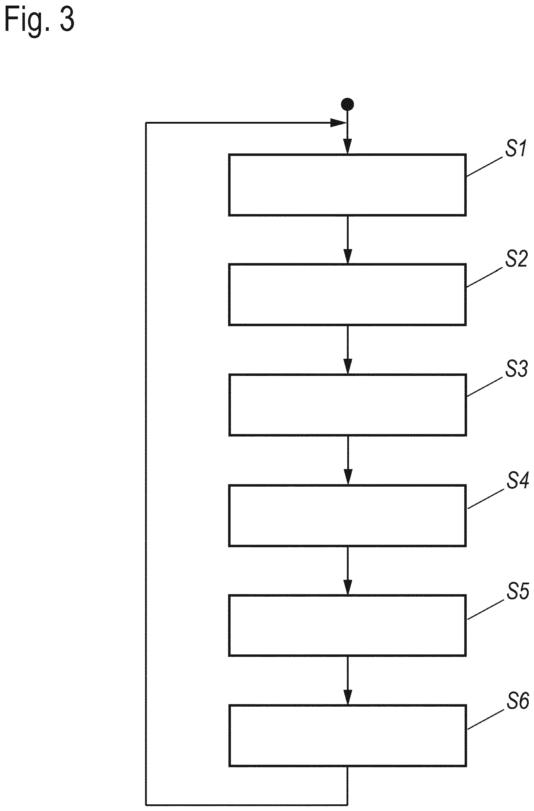

An embodiment of the method for operating the disc brake 1 according to figure 2 is now described with reference to the flow chart of figure 3.

After release of the disc brake 1 in a first step S1, the cylinder 22 is pressurized in a second step S2. In one embodiment, a central valve, e.g. arranged in the pressure unit 30, is used to apply pressurized air on the respective cylinders 22 of all disc brakes 1 of a commercial vehicle to operate their caliper position control units 20. In another embodiment, valves are locally mounted and associated with every cylinder 22. This advantageously leads to a faster operation of the caliper position control units 20. The valves can be solenoid valves that are controlled electrically. The valves can also be pneumatically driven. In particular, pressure applied to the brake actuator 10 can be used to control the valves such that pressurizing the brake actuator 10 leads to a venting of the cylinder 22, while de-pressurizing the brake actuator 10 leads to pressurizing of the cylinder 22.

After applying pressure to the cylinder 22, the associated piston rod 25 moves in negative z-direction. The head 25a pushes the cone 26a in negative z-direction, while the split ring 26b is held in position by the support ring 21b. To achieve this, the spring 27 is stiff enough to provide the counter force to operate the friction clutch 26 in a step S3.

After the split ring 21b of the friction clutch 26 has coupled to the bore 3b in a force-fitting manner, a further movement of the piston rod 25 leads to a movement of the caliper 4 in positive z-direction against the force of the spring 27 in a next step S4.

This movement continues until the gap G has vanished, which leads to a defined movement of the caliper 4 relative to the brake carrier 3. The magnitude of the gap G is defined by construction to be equal to the desired clearance between the outer brake pad 7 and the brake disc 2. It is set to be equal to half of the total clearance between the brake pads 6, 7 and the brake disc 2. The cylinder 22 is preferable kept under pressure to lock the position of the caliper 4 during operation of the vehicle while the disc brake 2 is not operated.

If the disc brake 2 is operated again in a next step S5, the cylinder 22 is vented and the pressure is released in a subsequent step S6. Accordingly, the piston rod 25 moves in positive z-direction due to the force of the retraction spring 24. The friction clutch 26 is released and the caliper 4 is again free to move along the guide axis 5a, i.e. in positive or negative z-direction. The system is ready to start again with step S1 if the disc brake 1 is released again.

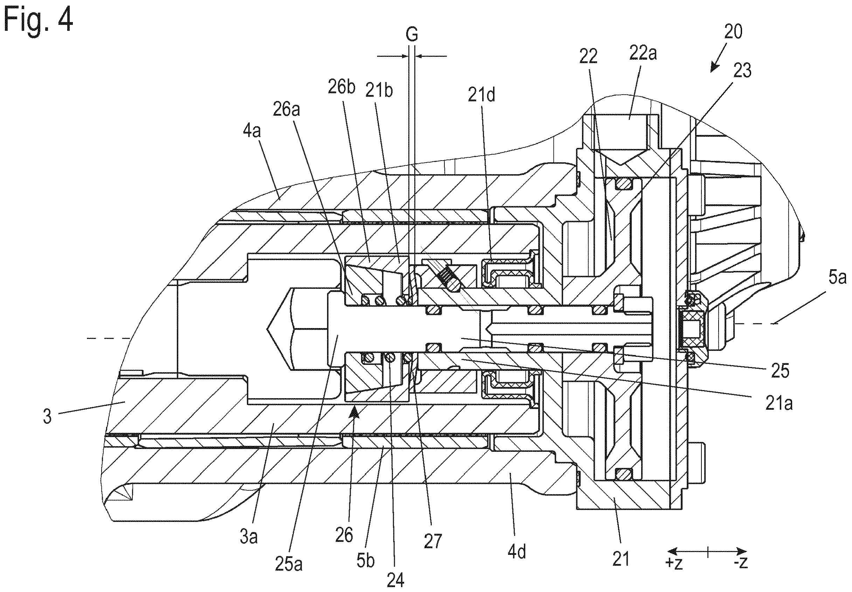

Figure 4 shows a section of a disc brake 1 with a third embodiment of a caliper position control unit 20 in a similar manner as the second embodiment shown in figure 2. In the following, only the differences to figure 2 are described.

In the third embodiment the retraction spring 24 is arranged between the cone 26a and the split ring 26b. To keep the split ring 26b in position during the activation of the friction clutch 26, a disc spring is provided as the spring 27, instead of a spiral spring used in the second embodiment. The outer circumference of the disc spring 27 is supported by a support ring 21b, which also provides for a stop lock for the movement of the split ring 26b. To prevent lubricant to compromise the correct function of the friction clutch 26, a gasket 21d is arranged between the sliding bearing 5 and the sleeve 21a. An according gap G is defined as in the second embodiment. The gap G is defined by the spring deflection of the disc spring. Therefore, a spring is installed that has a deflection which correlates with the desired clearance between the outer brake pad 7 and the brake disc 2.

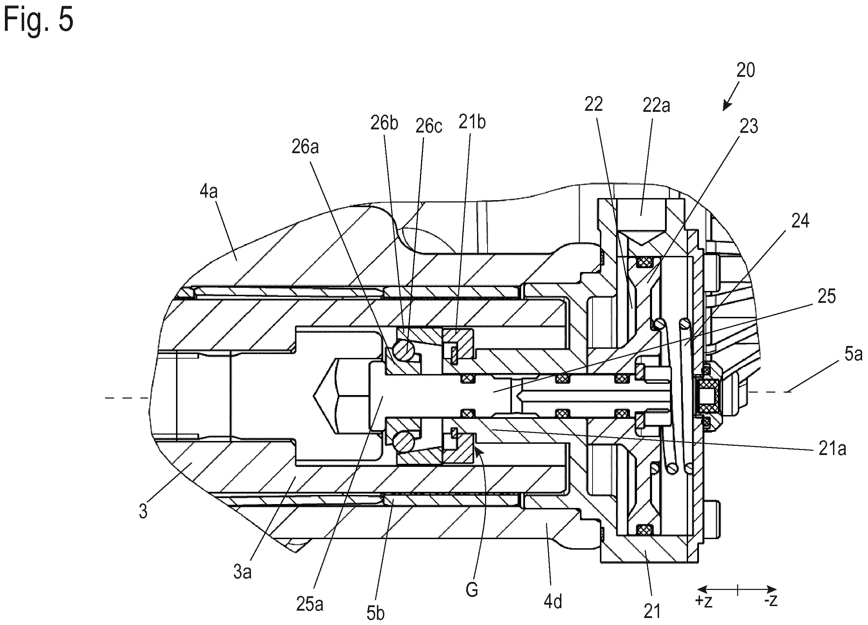

Figure 5 shows a section of a disc brake 1 with a forth embodiment of a caliper position control unit 20 in a similar manner as the second and the third embodiments shown in figures 2 and 4. Again, only the differences to figure 2 are described.

In the forth embodiment the cone 26a and the split ring 26b of the friction clutch 26 interact via bearing balls 26c. The split ring 26b is in a permanent contact with the inner surface of the guide section 3a, i.e. the bore 3b, such that a slight friction is present at all times. Due to the very little friction that is present between the cone 26a and the split ring 26b owned to the bearing balls 26c, the split ring 26b stays in position due to its inherent friction even without a support ring. Again, the maximum possible movement of the split ring 26b is limited by an adjacent further ring 21c that acts as a limit stop. An according gap G is defined as in the second embodiment. The split ring 26b stays in position due to the friction between the split ring 26b and the bore 3b. When pressurized, the cylinder 22 slides in positive z direction until the gap G has vanished.

In an alternative arrangement, a spring to generate an axial holding force, i.e. similar to the spring 27 in the second and third embodiment, could additionally be used also in this forth embodiment.

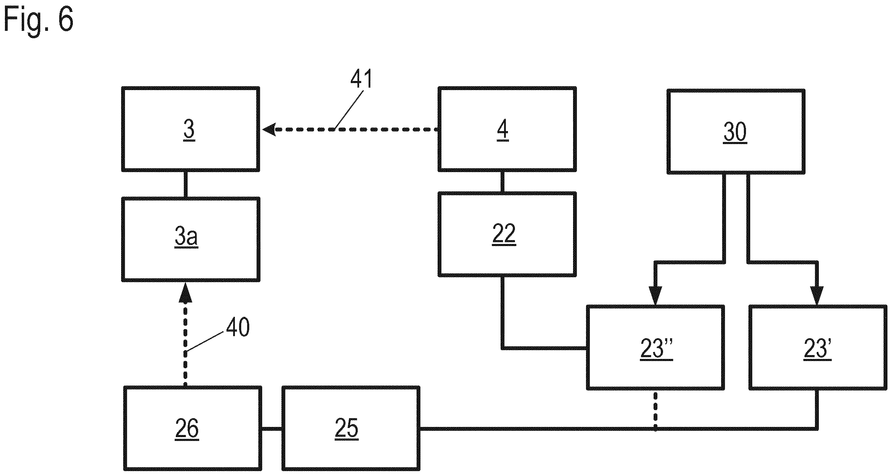

Figure 6 is a functional diagram to again illustrate the basic functional principle of a disc brake and a method to operate the disc brake according to the application.

In the above described embodiments, a single pneumatic actuator, i.e. a single cylinder/ piston-combination, is used to operate the friction clutch and perform the adjustment movement between caliper and brake carrier.

In the embodiment shown in figure 6, two pistons 23' and 23" are used for the two different functions. However, the elements 23' and 23" can also be regarded as two subsequent movements of a single piston 23.

In the embodiment shown in figure 6 the first piston 23' is activated by the pressure unit 30. The first piston 23 operates the friction clutch 26 via the piston rod 25. Operation of the friction clutch 26 leads to a force-fit 40 between the piston rod 25 and the guide section 3a of the brake carrier 3.

In a next step, the second piston 23" is operated by applying pressure by the pressure unit 30. The related cylinder 22 is form fitted with the caliper 4, while the second piston 23" is also coupled to the brake carrier 3 due to the force-fit 40.

In the next step, movement of the second piston 23" leads to an adjustment movement 41 of the caliper for relative to the brake carrier 3.

The foregoing descriptions of specific embodiments of the invention have been presented for purposes of illustration and description. They are not intended to be exhaustive or to limit the invention to the precise forms disclosed. It is obvious that many modifications and variations are possible. It is intended that the scope of the invention be defined by the claims appended hereto and their equivalents.

### REFERENCE SIGNS

- 1: disc brake
- 2: brake disc
- 2a: disc axis
- 3: brake carrier
- 3a: guide section
- 3b: bore
- 4: caliper
- 4a: caliper head
- 4b: caliper back
- 4c: tension strut
- 4d: guide section
- 5: guide bearing
- 5a: guide axis
- 5b: sliding bearing
- 6, 7: brake pad
- 8: brake plunger
- 9: brake lever
- 10: brake actuator

- 20: caliper position control unit
- 21: flange
- 21a: sleeve
- 21b: support ring
- 21c: further ring
- 21d: gasket
- 22: cylinder
- 22a: pressure inlet
- 23, 23', 23": piston
- 24: retraction spring
- 25: piston rod
- 25a: head
- 26: friction clutch
- 26a: cone
- 26b: split ring
- 26c: bearing ball
- 27: spring
- 30: pressure unit

- 40: force-fit
- 41: adjustment movement

- G: gap
- z: direction

- S1-S6: method steps

## Claims

1. A disc brake (1), in particular pneumatically actuated, for a vehicle, in particular for a commercial vehicle, comprising a floating caliper (4) straddling a brake disc (2) and shiftably mounted on at least one guide bearing (5) of a stationary brake carrier (3); two brake pads (6, 7) displaceable arranged in opposite direction in the caliper (4), wherein an inner brake pad (6) of the two brake pads (6, 7) can be pressed against the brake disc (2) by a brake actuator (10), **characterized in that**
it comprises a caliper position control unit (20) with an actuator for moving the caliper (4) relative to the brake carrier (3) and a friction clutch (26) for coupling the actuator to the caliper (4) and/or the brake carrier (3), wherein the friction clutch (26) is operated by the actuator.

2. The disc brake (1) according to claim 1, wherein the caliper position control unit (20) is arranged at an outer end of a guide section (4d) of a caliper head (4a), the guide section (4d) being coupled to a guide section (3a) of the brake carrier (3) via the guide bearing (5).

3. The disc brake (1) according to claim 1 or 2, wherein the actuator is pneumatically operated and comprises a cylinder (22) and at least one piston (23).

4. The disc brake (1) according to claim 3, wherein the cylinder (22) is fixed to the caliper (4) and the piston (23) is coupled to a piston rod (25) that extends into a bore (3b) of the guide section (3a) of the brake carrier (3).

5. The disc brake (1) according to claim 4, wherein the friction clutch (26) is mounted on the piston rod (25) within the bore (3b).

6. The disc brake (1) according to claim 5, wherein the friction clutch (26) comprises a cone (26a) arranged on the piston rod (25) and a radially expandable split ring (26b) that interacts with the guide section (3a) of the brake carrier (3) in a force-fitting manner.

7. The disc brake (1) according to claim 6, wherein a support ring (21b) is arranged adjacent to the split ring (26b) to hold the split ring (26b) in position while being radially expanded on interaction with the cone (26a).

8. The disc brake (1) according to claim 7, wherein a spring (27) is arranged between the support ring (21b) and a fixed component of the caliper position control unit (20).

9. The disc brake (1) according to claim 8, wherein the fixed component is a sleeve (21a) attached to a mounting flange (21) of the caliper position control unit (20).

10. The disc brake (1) according to claim 8 or 9, wherein the spring (27) is arranged axially around the piston rod (25).

11. The disc brake (1) according to one of claims 8 to 10, wherein the spring (27) is a spiral spring or at least one disc spring.

12. The disc brake (1) according to one of claims 7 to 11, wherein movement of the support ring (21b) is delimited to the width of a gap (G), which is formed between the support ring (21b) and a fixed part of the caliper position control unit (20).

13. The disc brake (1) according to claim 12, wherein the width of the gap (G) equals a desired clearance between the brake disc (2) and one of the brake pads (6, 7).

14. A method for operating a disc brake (1) that comprising a floating caliper (4) straddling a brake disc (2) and shiftably mounted on at least one guide bearing (5) of a stationary brake carrier (3); an inner brake pad (6) and an outer brake pad (7) displaceable arranged in opposite direction in the caliper (4), wherein the inner brake pad (6) of the two brake pads (6, 7) can be pressed against the brake disc (2) by a brake actuator (10) and wherein the outer brake pad (7) is fixed to the caliper (4); and a caliper position control unit (20), with the following steps:
- releasing the disc brake (1);
- activating a friction clutch (26) of the caliper position control unit (20) to couple an actuator to the caliper (4) and/or the brake carrier (3);
- operating the actuator to move the caliper (4) relative to the brake carrier (3) until a defined clearance between the brake disc (2) and the outer brake pad (7), wherein the friction clutch (26) is operated by the actuator; and
- deactivating the friction clutch (26);
- operating the disc brake (1).

## Patentansprüche

1. Scheibenbremse (1), insbesondere druckluftbetätigt, für ein Fahrzeug, insbesondere ein Nutzfahrzeug, umfassend einen Schwimmsattel (4), der eine Bremsscheibe (2) übespannt und verschiebbar an mindestens einem Führungslager (5) eines ortsfesten Bremsträgers (3) montiert ist; zwei in entgegengesetzter Richtung verlagerbar im Sattel (4) angeordnete Bremsbeläge (6, 7), wobei ein innerer Bremsbelag (6) der beiden Bremsbeläge (6, 7) von einem Bremszylinder (10) gegen die Bremsscheibe (2) gepresst werden kann, **dadurch gekennzeichnet, dass** sie eine Sattellageregeleinheit (20) mit einem Aktor zur Bewegung des Sattels (4) relativ zum Bremsträger (3) und eine Reibungskupplung (26) zum Ankuppeln es Aktors an den Sattel (4) und/oder den Bremsträger (3) umfasst, wobei die Reibungskupplung (26) vom Aktor betätigt wird.

2. Scheibenbremse (1) nach Anspruch 1, wobei die Sattellageregeleinheit (20) an einem Außenende eines Führungsabschnitts (4d) eines Sattelkopfes (4a) angeordnet ist, wobei der Führungsabschnitt (4d) über das Führungslager (5) an einen Führungsabschnitt (3a) des Bremsträgers (3) gekoppelt ist.

3. Scheibenbremse (1) nach Anspruch 1 oder 2, wobei der Aktor druckluftbetätigt ist und einen Zylinder (22) und mindestens einen Kolben (23) umfasst.

4. Scheibenbremse (1) nach Anspruch 3, wobei der Zylinder (22) am Sattel (4) befestigt ist und der Kolben (23) an eine Kolbenstange (25) gekoppelt ist, die in eine Bohrung (3b) des Führungsabschnitts (3a) des Bremsträgers (3) ragt.

5. Scheibenbremse (1) nach Anspruch 4, wobei die Reibungskupplung (26) innerhalb der Bohrung (3b) an der Kolbenstange (25) montiert ist.

6. Scheibenbremse (1) nach Anspruch 5, wobei die Reibungskupplung (26) einen an der Kolbenstange (25) angeordneten Konus (26a) und einen radial spreizbaren Spaltring (26b) umfasst, der kraftschlüssig mit dem Führungsabschnitt (3a) des Bremsträgers (3) zusammenwirkt.

7. Scheibenbremse (1) nach Anspruch 6, wobei neben dem Spaltring (26b) ein Stützring (21b) angeordnet ist, der den Spaltring (26b) während seiner radialen Spreizung auf Zusammenwirken mit dem Konus (26a) in Position hält.

8. Scheibenbremse (1) nach Anspruch 7, wobei zwischen dem Stützring (21b) und einem Festteil der Sattellageregeleinheit (20) eine Feder (27) angeordnet ist.

9. Scheibenbremse (1) nach Anspruch 8, wobei das Festteil eine Buchse (21a) ist, die an einem Befestigungsflansch (21) der Sattellageregeleinheit (20) angebracht ist.

10. Scheibenbremse (1) nach Anspruch 8 oder 9, wobei die Feder (27) axial rund um die Kolbenstange (25) angeordnet ist.

11. Scheibenbremse (1) nach einem der Ansprüche 8 bis 10, wobei die Feder (27) eine Spiralfeder oder mindestens eine Tellerfeder ist.

12. Scheibenbremse (1) nach einem der Ansprüche 7 bis 11, wobei die Bewegung des Stützrings (21b) auf die Breite eines Spalts (G) beschränkt ist, der zwischen dem Stützring (21b) und einem Festteil der Sattellageregeleinheit (20) gebildet ist.

13. Scheibenbremse (1) nach Anspruch 12, wobei die Breite des Spalts (G) einem gewünschten Abstand zwischen der Bremsscheibe (2) und einem der Bremsbeläge (6, 7) gleich ist.

14. Verfahren zur Betätigung einer Scheibenbremse (1) umfassend einen Schwimmsattel (4), der eine Bremsscheibe (2) übespannt und verschiebbar an mindestens einem Führungslager (5) eines ortsfesten Bremsträgers (3) montiert ist; einen inneren Bremsbelag (6) und einen äußeren Bremsbelag (7), die in entgegengesetzter Richtung verlagerbar im Sattel (4) angeordnet sind, wobei der innere Bremsbelag (6) der beiden Bremsbeläge (6, 7) von einem Bremszylinder (10) gegen die Bremsscheibe (2) gepresst werden kann und wobei der äußere Bremsbelag (7) am Sattel (4) befestigt ist; und eine Sattellageregeleinheit (20), wobei das Verfahren die folgenden Schritte umfasst:
- das Lösen der Scheibenbremse (1);
- das Aktivieren einer Reibungskupplung (26) der Sattellageregeleinheit (20) zum Ankuppeln eines Aktors an den Sattel (4);
- die Betätigung des Aktors zum Verschieben des Sattels (4) gegenüber dem Bremsträger (3), bis zwischen der Bremsscheibe (2) und dem äußeren Bremsbelag (7) ein bestimmtes Lüftspiel vorhanden ist, wobei die Reibungskupplung (26) vom Aktor betätigt wird; und
- das Deaktivieren der Reibungskupplung (26);
- die Betätigung der Scheibenbremse (1).

## Revendications

1. Frein (1) à disque, en particulier actionné pneumatiquement, d'un véhicule, en particulier d'un véhicule commercial, comprenant un étrier (4) flottant, chevauchant un disque (2) de frein et monté de manière mobile sur au moins un palier (5) de guidage d'un support (3) de frein fixe, deux garnitures (6, 7) de frein mobiles, montées dans des directions opposées dans l'étrier (4), une garniture (6) de frein intérieure des deux garnitures (6, 7) de frein pouvant être poussée sur le disque (2) de frein par un actionneur (10) de frein, **caractérisé en ce que**
il comprend une unité (20) de commande de la position de l'étrier ayant un actionneur pour déplacer l'étrier (4) par rapport au support (3) de frein et un embrayage (26) à friction pour coupler l'actionneur à l'étrier (4) et/ou au support (3) de frein, l'embrayage (26) à friction étant mis en fonctionnement par l'actionneur.

2. Frein (1) à disque suivant la revendication 1, dans lequel l'unité (20) de commande de la position de l'étrier est disposée à une extrémité extérieure d'une partie (4d) de guidage d'une tête (4a) de l'étrier, la partie (4d) de guidage étant couplée à une partie (3a) de guidage du support (3) de frein par l'intermédiaire du palier (5) de guidage.

3. Frein (1) à disque suivant la revendication 1 ou 2, dans lequel l'actionneur fonctionne pneumatiquement et comprend un cylindre (22) et au moins un piston (23).

4. Frein (1) à disque suivant la revendication 3, dans lequel le cylindre (22) est fixé à l'étrier (4) et le piston (23) est couplé à une tige (25) de piston, qui s'étend dans un alésage (3b) de la partie (3a) de guidage du support (3) de frein.

5. Frein (1) à disque suivant la revendication 4, dans lequel l'embrayage (26) à friction est monté sur la tige (25) du piston dans l'alésage (3b).

6. Frein (1) à disque suivant la revendication 5, dans lequel l'embrayage (26) à friction comprend un cône (26a) monté sur la tige (25) du piston et une rondelle (26b) ouverte pouvant s'agrandir radialement, qui interagit avec la partie (3a) de guidage du support (3) de frein d'une manière à adaptation de force.

7. Frein (1) à disque suivant la revendication 6, dans lequel une bague (21b) de support est disposée au voisinage de la rondelle (26b) ouverte pour maintenir la rondelle (26b) ouverte en position, alors qu'elle est agrandie radialement par interaction avec le cône (26a).

8. Frein (1) à disque suivant la revendication 7, dans lequel un ressort (27) est disposé entre la bague (21b) de support et un élément fixe de l'unité (20) de commande de la position de l'étrier.

9. Frein (1) à disque suivant la revendication 8, dans lequel l'élément fixe est un manchon (21a) fixé à une bride (21) de montage de l'unité (20) de commande de la position de l'étrier.

10. Frein (1) à disque suivant la revendication 8 ou 8, dans lequel le ressort (27) est disposé axialement autour de la tige (25) du piston.

11. Frein (1) à disque suivant l'une des revendications 8 à 10, dans lequel le ressort (27) est un ressort spirale ou au moins un ressort à disque.

12. Frein (1) à disque suivant l'une des revendications 7 à 11, dans lequel le déplacement de la bague (21b) de support est limité à la largeur d'un intervalle (G), qui est formé entre la bague (21b) de support et une partie fixe de l'unité (20) de commande de la position de l'étrier.

13. Frein (1) à disque suivant la revendication 12, dans lequel la largeur de l'intervalle (G) est égale à un jeu souhaité entre le disque (2) de frein et l'une des garnitures (6, 7) de frein.

14. Procédé pour faire fonctionner un frein (1) à disque, qui comprend un étrier (4) flottant, chevauchant un disque (2) de frein et monté de manière mobile sur au moins un palier (5) de guidage d'un support (3) de frein fixe, deux garnitures (6, 7) de frein mobiles, montées dans des directions opposées dans l'étrier (4), une garniture (6) de frein intérieure des deux garnitures (6, 7) de frein pouvant être poussée sur le disque (2) de frein par un actionneur (10) de frein, et dans lequel la garniture (7) de frein extérieure est fixée à l'étrier (4) ; et l'unité (20) de commande de position de l'étrier ayant les stades suivants :
- desserrage du frein (1) à disque ;
- activation d'un embrayage (26) à friction de l'unité (20) de commande de la position de l'étrier pour coupler un actionneur à l'étrier (4) et/ou au support (3) de frein ;
- mise en fonctionnement de l'actionneur pour déplacer l'étrier (4) par rapport au support (3) de frein jusqu'à un jeu défini entre le disque (2) de frein et la garniture (7) de frein extérieure, l'embrayage (26) à friction étant mis en fonctionnement par l'actionneur ; et
- désactivation de l'embrayage (26) à friction ;
- mise en fonctionnement du frein (1) à disque.
